# EUROPÄISCHE PATENTSCHRIFT

(11) **EP 3 791 461 B1**
(45) Veröffentlichungstag und Bekanntmachung des Hinweises auf die Patenterteilung: **07.06.2023**
(21) Anmeldenummer: 19720368.0
(22) Anmeldetag: 24.04.2019
(51) Int. Cl.: F16C 23/08, H02K 7/00, H02K 7/08, F16D 3/72, F16C 35/073, F16C 19/06, F16D 3/06

(54) **ELEKTROMOTOR MIT EINER ROTORWELLE UND EINEM ERSTEN UND ZWEITEN LAGER**
ELECTRIC MOTOR HAVING A ROTOR SHAFT AND A FIRST AND A SECOND BEARING
MOTEUR ÉLECTRIQUE DOTÉ D'UN ARBRE DE ROTOR ET D'UN PREMIER ET D'UN SECOND PALIER

(30) Priorität: 08.05.2018 DE 102018003698
(43) Veröffentlichungstag der Anmeldung: 17.03.2021
(73) Patentinhaber: SEW-EURODRIVE GmbH & Co. KG, 76646 Bruchsal (DE)
(72) Erfinder: WÖPPERMANN, Markus, 76307 Karlsbad (DE); SCHILLINGER, Jens, 76437 Rastatt (DE)
(86) Internationale Anmeldenummer: PCT/EP2019/025124
(87) Internationale Veröffentlichungsnummer: WO 2019/214845

(56) Entgegenhaltungen:
- WO-A1-2008/110186
- WO-A2-96/16465
- DE-A1- 10 312 941
- DE-A1-102011 012 632
- JP-A- S5 937 879

## Beschreibung

Die Erfindung betrifft einen Elektromotor mit einer Rotorwelle und einem ersten und zweiten Lager.

Es ist allgemein bekannt, dass ein Elektromotor eine Rotorwelle aufweist.

Aus der DE 103 12 941 A1 ist ein Bausatz für eine Baureihe von Getriebemotoren bekannt.

Aus der WO 96/16465 A2 ist als nächstliegender Stand der Technik ein elektrischer Motor bekannt.

Aus der WO 2008/110186 A1 ist eine Drehmomentübertragungsmittel zum drehfesten Verbinden von einer Welle und von einem Motor bekannt.

Aus der DE 10 2011 012 632 A1 ist eine Antriebsvorrichtung mit einem Elektromotor und einem Winkelsensor bekannt.

Aus der JP S59 37879 A ist ein supraleitender Rotor bekannt.

Der Erfindung liegt daher die Aufgabe zugrunde, einen Elektromotor insbesondere temperaturunempfindlich weiterzubilden.

Erfindungsgemäß wird die Aufgabe bei dem Elektromotor nach den in Anspruch 1 angegebenen Merkmalen gelöst.

Wichtige Merkmale der Erfindung bei dem Elektromotor mit einer Rotorwelle und einem ersten und zweiten Lager sind, dass die Rotorwelle ein erstes Rotorwellenteil und ein zweites Rotorwellenteil aufweist,
wobei das erste Rotorwellenteil über das erste Lager drehbar gelagert ist,
wobei das zweite Rotorwellenteil über das zweite Lager drehbar gelagert ist,
wobei ein Balg an seinem ersten axialen Endbereich mit dem ersten Rotorwellenteil verbunden ist, insbesondere schweißverbunden ist,
wobei der Balg an seinem zweiten axialen Endbereich mit dem zweiten Rotorwellenteil verbunden ist, insbesondere schweißverbunden ist.

Von Vorteil ist dabei, dass thermisch bedingte axial gerichtete Längenänderungen vom Balg kompensierbar sind. Somit sind beide Lager als Festlager ausführbar und axial außerhalb der Lager sind beidseitig Vorrichtungen anordenbar, welche empfindlich sind gegen axiale Ausdehnungen. Insbesondere ist B-seitig ein Winkelsensor anordenbar und mittels des Festlagers vor störenden axialen Ausdehnungen schützbar. Ebenso ist A-seitig das zweite Rotorwellenteil mit einer Schrägverzahnung versehbar, welche im Eingriff steht mit einer Verzahnung, insbesondere Schrägverzahnung, eines Verzahnungsteils eines vom Motor angetriebenen Getriebes. Somit sind getriebeabtriebsseitige Positionsfehler, insbesondere Winkelpositionsfehler, vermeidbar.

Erfindungsgemäß ist zwischen erstem und zweitem Rotorwellenteil ein Ringteil angeordnet,
insbesondere wobei das erste oder zweite Rotorwellenteil eine bezogen auf die Drehachse des Rotorwellenteils in Umfangsrichtung umlaufende Ringnut aufweist, in welcher das Ringteil zumindest teilweise aufgenommen ist und/oder in welche das Ringteil zumindest teilweise hineinragt. Von Vorteil ist dabei, dass die beiden Rotorwellenteile mittels des Ringteils einen ersten Auflagepunkt aufweisen und der Balg einen vom Ringteil axial beabstandeten zweiten Auflagepunkt vorgibt. Zusätzlich ist jedes der Rotorwellenteile über ein jeweiliges Lager festgelegt, so dass weitere Auflagepunkte vorgegeben sind. Wichtig ist dabei, dass die Lager axial beabstandet sind vom Ringteil und vom Balg, der vom Ringteil ebenfalls axial beabstandet ist. Der Balg verbindet die beiden Rotorwellenteile in Umfangsrichtung steif, so dass Drehmoment übertragen wird. Mittels der genannten Elemente, also erstes Lager, zweites Lager, Ringteil und darüber hinaus auch Balg, ist die gesamte Rotorwelle stabil zusammengesetzt und als Ganzes über die beiden Lager gelagert.

Erfindungsgemäß ist das Ringteil ein Dichtring, insbesondere ein O-Ring, insbesondere aus Gummi oder einem Kunststoff, insbesondere Polymer. Von Vorteil ist dabei, dass eine axiale Verschiebbarkeit der beiden Rotorwellenteile zueinander ermöglicht ist und trotzdem ein Auflagepunkt definiert ist.

Bei einer vorteilhaften Ausgestaltung ist der vom Ringteil überdeckte axiale Bereich im vom zweiten Lager überdeckten axialen Bereich enthalten. Von Vorteil ist dabei, dass eine erhöhte Stabilität der Rotorwelle erreichbar ist.

Bei einer vorteilhaften Ausgestaltung ist der Balg axial zwischen dem ersten und dem zweiten Lager angeordnet,
insbesondere wobei der Balg axial zwischen dem zweiten Rotorwellenteil und dem ersten Lager angeordnet ist. Von Vorteil ist dabei, dass eine thermisch bedingte axiale Längenveränderung vom Balg kompensierbar ist.

Bei einer vorteilhaften Ausgestaltung ist der Balg einerseits an einer Stufe des ersten Rotorwellenteils abgestützt und ist andererseits an einer Stirnfläche des zweiten Rotorwellenteils abgestützt ist. Von Vorteil ist dabei, dass eine Wellenzentrierung in einfacher Weise ermöglicht ist, indem vor der Schweißverbindung mit dem Balg ein Verschieben in radialer Richtung ermöglicht ist.

Bei einer vorteilhaften Ausgestaltung berührt der Balg das erste Rotorwellenteil an einer Kontaktfläche, welche eine einzige axiale Position aufweist, insbesondere also sich in Umfangsrichtung und in radialer Richtung erstreckt. Von Vorteil ist dabei, dass ein radiales Verschieben des ersten Rotorwellenteils vor Herstellen der Schweißverbindung mit dem Balg ausführbar ist und somit eine Zentrierung der Rotorwellenteile zueinander ausführbar und durch das nachfolgende Schweißverbinden festlegbar ist.

Bei einer vorteilhaften Ausgestaltung berührt der Balg das zweite Rotorwellenteil an einer Kontaktfläche, welche eine einzige axiale Position aufweist, insbesondere also sich in Umfangsrichtung und in radialer Richtung erstreckt,
insbesondere so, dass der Balg bei der Herstellung des Motors vor dem Schweißverbinden des Balgs mit dem zweiten Rotorwellenteil radial verschiebbar angeordnet ist. Von Vorteil ist dabei, dass ein radiales Verschieben des zweiten Rotorwellenteils vor Herstellen der Schweißverbindung mit dem Balg ausführbar ist und somit eine Zentrierung der Rotorwellenteile zueinander ausführbar und durch das nachfolgende Schweißverbinden festlegbar ist.

Bei einer vorteilhaften Ausgestaltung ist der Balg als Ringelement ausgeführt, wobei die Ringöffnung einen lichten Innendurchmesser aufweist, der größer ist als der Außendurchmesser des ersten Rotorwellenteils in dem vom Balg überdeckten axialen Bereich,
insbesondere so, dass der Balg bei der Herstellung des Motors vor dem Schweißverbinden des Balgs mit dem ersten Rotorwellenteil radial verschiebbar angeordnet ist. Von Vorteil ist dabei, dass das erste Rotorwellenteil durch den Balg durchführbar und in ein Sackloch des zweiten Rotorwellenteils einführbar ist. Auf diese Weise kompensiert der Balg bei axialer relativer Verschiebung der beiden Rotorwellenteile und ermöglicht trotzdem eine Drehmomentdurchleitung des vom Aktivteil in Wirkverbindung mit dem Stator des Elektromotors erzeugten Drehmoments.

Bei einer vorteilhaften Ausgestaltung ist das erste Rotorwellenteil durch den Balg, insbesondere durch die Ringöffnung des Balgs, durchgeführt. Von Vorteil ist dabei, dass der Balg an einer Stufenwand des ersten Rotorwellenteils anliegt und verbunden ist, wobei das erste Rotorwellenteil in das zweite Rotorwellenteil hineinragt und somit axial beabstandet vom Balg über ein Ringteil am zweiten Rotorwellenteil anliegt.

Bei einer vorteilhaften Ausgestaltung ist die Kontaktfläche am zweiten Rotorwellenteil eine Stirnfläche des zweiten Rotorwellenteils. Von Vorteil ist dabei, dass die axial äußerste Stirnfläche verwendbar ist zur Verbindung mit dem Balg. Somit ist der axiale Abstand zwischen den beiden Verbindungsbereichen, also Kontaktflächen, des Balgs möglichst gering haltbar und somit ein möglichst drehsteifer Balg verwendbar.

Bei einer vorteilhaften Ausgestaltung ist die Kontaktfläche am ersten Rotorwellenteil an einer Stufe des ersten Rotorwellenteils angeordnet. Von Vorteil ist dabei, dass der Balg an der Stufenwand anschweißbar ist und somit vor dem Verschweißen die beiden Rotorwellenteile zueinander koaxial ausrichtbar sind.

Bei einer vorteilhaften Ausgestaltung ist ein Aktivteil vom ersten Rotorwellenteil aufgenommen,
wobei der Balg
   - entweder axial zwischen dem auf dem ersten Rotorwellenteil angeordneten Aktivteil und dem zweiten Lager und/oder dem zweiten Rotorwellenteil angeordnet ist,
   - oder axial zwischen dem auf dem zweiten Rotorwellenteil angeordneten Aktivteil und dem ersten Lager und/oder dem ersten Rotorwellenteil angeordnet ist,
insbesondere wobei das Aktivteil ein Kurzschlusskäfig oder eine Permanentmagnetanordnung ist,
insbesondere wobei der Kurzschlusskäfig wärmeleitend verbunden ist mit dem ersten Rotorwellenteil,
insbesondere wobei der Wärmeübergangswiderstand zwischen dem Kurzschlusskäfig und dem ersten Rotorwellenteil betragsmäßig kleiner ist als der Wärmeübergangswiderstand zwischen dem ersten Rotorwellenteil und zur Umgebung und/oder zum Gehäuse des Motors. Von Vorteil ist dabei, dass das Aktivteil Drehmoment, welches mittels der Wirkverbindung mit dem Stator erzeugt ist, in das erste Rotorwellenteil einleitet.

Bei einer vorteilhaften Ausgestaltung weist das Gehäuse des Elektromotors ein Gehäuseteil auf, das mit einem ersten und einem zweiten Flanschteil verbunden ist, wobei das Gehäuseteil zwischen dem ersten und zweiten Flanschteil angeordnet ist,
wobei das erste Lager im ersten **Flanschteil** aufgenommen ist,
wobei das zweite Lager im zweiten **Flanschteil** aufgenommen ist. Von Vorteil ist dabei, dass die beiden Flanschteile als Lagerflansche ausführbar sind und somit Lager aufnehmen, wobei die beiden Flanschteile mittels des Gehäuseteils voneinander axial beabstandet sind.

Bei einer vorteilhaften Ausgestaltung weist der Elektromotor ein Getriebe auf, wobei das zweite Rotorwellenteil mit einer Schrägverzahnung versehen ist oder drehfest verbunden ist mit einem schrägverzahnten Verzahnungsteil,
wobei die Schrägverzahnung oder das schrägverzahnten Teil mit einem Verzahnungsteil des Getriebes im Eingriff ist. Von Vorteil ist dabei, dass mittels des als Festlager ausgeführten zweiten Lagers die schrägverzahnten Teile optimal zueinander ausgerichtet sind und somit getriebeabtriebsseitige Positionsfehler vermeidbar sind. Von Vorteil ist dabei, dass Positionsfehler getriebeabtriebsseitig vermeidbar sind.

Bei einer vorteilhaften Ausgestaltung ist der Balg aus einem Metallblech gefertigt. Von Vorteil ist dabei, dass eine einfache Herstellung ermöglicht ist.

Bei einer vorteilhaften Ausgestaltung ist ein Wellendichtring auf der vom ersten Rotorwellenteil abgewandten Seite des zweiten Lagers angeordnet,
insbesondere wobei der Wellendichtring im ersten Flanschteil aufgenommen ist, und/oder wobei eine Dichtlippe auf dem zweiten Rotorwellenteil läuft. Von Vorteil ist dabei, dass kein Schmutz eindringt zum Verbindungsbereich zwischen den beiden Rotorwellenteilen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine Schrägansicht auf einen erfindungsgemäßen angeschnittenen Elektromotor dargestellt.

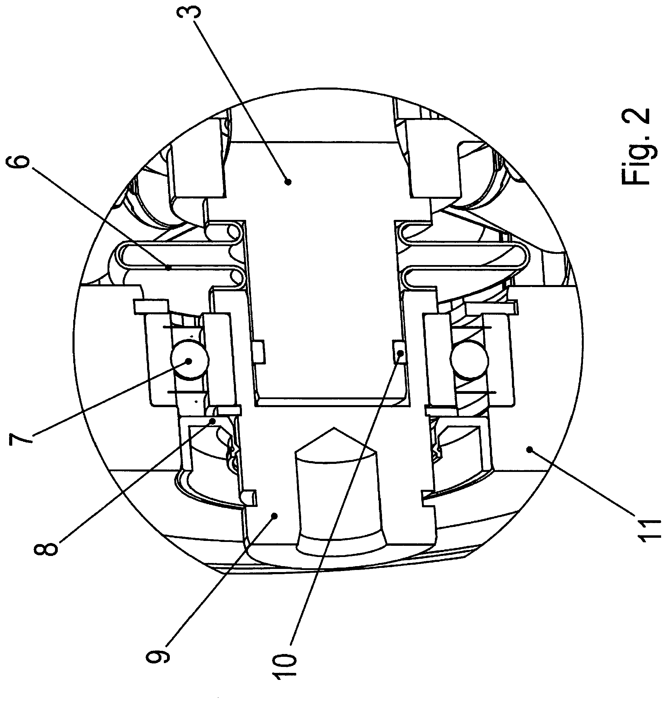

In der Figur 2 ist ein Ausschnitt aus Figur 1 vergrößert dargestellt.
In der Figur 3 ist ein anderer erfindungsgemäßer Elektromotor dargestellt, bei welchem ein Balg 6 an einer anderen axialen Position angeordnet ist, nämlich an der axial von der vom Motor anzutreibenden Last abgewandten Seite des Aktivteils 4 des Motors.
In der Figur 4 ist ein Ausschnitt aus Figur 3 vergrößert dargestellt.

Wie in den Figuren dargestellt, weist der Elektromotor ein erstes Flanschteil 1 auf, insbesondere an seiner B-Seite, also an der von der anzutreibenden Last abgewandten Seite.

Das Flanschteil 1 ist als Lagerflansch ausgeführt. Im Flanschteil 1 ist ein Lager 2 aufgenommen, welches ein erstes Rotorwellenteil 3 lagert. Das Lager 2 ist als Festlager ausgeführt, insbesondere also nicht als Loslager. Somit sind thermisch bedingte Längenänderungen nicht vom Lager 2 kompensierbar.

B-seitig ist ein in den Figuren nicht gezeigter Winkelsensor angeordnet. Dabei wird eine Sensorwelle des Winkelsensors hohl ausgeführt und in eine mittig in dem ersten Rotorwellenteil 3 angeordnete Ausnehmung eingeführt. Dabei weist die Sensorwelle einen außenkonusförmigen Bereich auf, der an einem innenkonusförmigen Bereich 13 des ersten Rotorwellenteils 3 anliegt. Somit ist eine sehr einfache und präzise Wellenzentrierung ermöglicht. Eine durch die Hohlwelle durchgeführte Schraube wird mit ihrem Außengewinde in ein Innengewinde 14 des ersten Rotorwellenteils 3 eingeschraubt, wobei der Schraubenkopf der Schraube die Sensorwelle an das erste Rotorwellenteil 3 andrückt.

Das erste Flanschteil 1 ist mit einem Gehäuseteil 12 verbunden, das mit einem zweiten Flanschteil 11 verbunden ist. Das Gehäuseteil 12 ist also axial zwischengeordnet zwischen die beiden Flanschteile (1, 11).

Im zweiten Flanschteil 11 ist ebenfalls ein Lager 7 aufgenommen, das als Festlager ausgeführt ist.

Mittels des Lagers 7 ist ein zweites Rotorwellenteil 9 gelagert.

Das zweite Rotorwellenteil 9 weist eine mittig angeordnete Ausnehmung, insbesondere axial gerichtetes Sackloch, auf, wobei das erste Rotorwellenteil 3 in die Ausnehmung hineinragt.

Ein in einer Ringnut des ersten Rotorwellenteils 3 angeordneter Dichtring 10, insbesondere O-Ring, dichtet zum zweiten Rotorwellenteil 9 hin ab und bewirkt die wellenzentrische Ausrichtung, also die koaxiale Ausrichtung, des ersten Rotorwellenteils 3 zum zweiten Rotorwellenteil 9.

**Das erste Rotorwellenteil 3 ist zwar über das erste Lager 2 gelagert, ragt aber auch in den vom zweiten Lager 7 in axialer Richtung, also in Richtung der Drehachse des Rotorwellenteils, überdeckten Bereich hinein. Denn das erste Rotorwellenteil 3 ist in eine Ausnehmung des zweiten Rotorwellenteils 9 hineinragend angeordnet, wobei das zweite Rotorwellenteil 9 über das zweite Lager 7 gelagert ist. insgesamt ist also die Rotorwelle des Elektromotors zweiteilig ausgeführt und trägt den Aktivteil 5. Trotz der Zweiteilung ist also eine hohe Stabilität auch bei der Lagerung erreichbar.**

Außerdem ist das erste Rotorwellenteil 3 mittels eines Balgs 6 mit dem zweiten Rotorwellenteil 9 verbunden.

Der Balg 6 ist an seinem ersten axialen Ende mit dem ersten Rotorwellenteil 3, insbesondere an einer Stufe des ersten Rotorwellenteils 3, angelegt und verbunden, insbesondere schweißverbunden.

An seinem anderen axialen Ende ist der Balg 6 an der Stirnseite des zweiten Rotorwellenteils 9 angelegt und verbunden, insbesondere schweißverbunden.

Die Kontaktfläche des Balg 6 zum ersten Rotorwellenteil 3 hin weist nur eine axiale Position auf. Somit erstreckt die Kontaktfläche sich nur in radialer Richtung und in Umfangsrichtung bezogen auf die Drehachse des Rotorwellenteils. Auf diese Weise ist bei Herstellung der Balg in radialer Richtung verschiebbar und somit relativ zum ersten Rotorwellenteil 3 zentrierbar.

Ebenso erstreckt sich die Kontaktfläche des Balgs 6 zum zweiten Rotorwellenteil 9 hin in radialer Richtung und in Umfangsrichtung. Die Kontaktfläche des Balgs 6 zum zweiten Rotorwellenteil 9 hin weist ebenfalls nur eine einzige axiale Position auf. Auf diese Weise ist bei Herstellung der Kupplung der Balg 6 in radialer Richtung verschiebbar und somit relativ zum ersten Rotorwellenteil 3 zentrierbar.

Mittels des Balgs 6 sind thermisch bedingte axial gerichtete Längenveränderungen kompensierbar. Hierzu ist das erste Rotorwellenteil 3 mit axialem Spiel in der Ausnehmung des zweiten Rotorwellenteils 9 angeordnet.

Der vom Dichtring 10 in axialer Richtung überdeckte Bereich ist im vom Lager 7 des zweiten Rotorwellenteils 9 in axialer Richtung überdeckten Bereich enthalten.

Axial zwischen den beiden Lagern 2 und 7 ist ein Aktivteil 5, insbesondere ein einen Kurzschlusskäfig oder Permanentmagnete aufweisendes Teil, angeordnet.

Der Balg 6 ist vorzugsweise aus einem Blech gefertigt. Die Falten des Balgs 6 sind in axialer Richtung stauchbar. Vorzugsweise ist der Balg 6 als Rotationskörper gefertigt und weist ein mittig angeordnetes Loch auf, durch welches das erste Rotorwellenteil 3 hindurchragt.

Das Statorgehäuse 12, welches als ein Gehäuseteil fungiert, umgibt den Stator 5 des Elektromotors radial.

Auf der vom Balg 6 abgewandten Seite des Lagers 7 ist ein Wellendichtring 8 angeordnet, der vom zweiten Flanschteil 11 aufgenommen ist, insbesondere wobei das Flanschteil 11 hierzu einen Lagersitz für das Lager 7 aufweist. Die Dichtlippe des Wellendichtrings 8 läuft auf dem zweiten Rotorwellenteil 9, welches hierzu eine fein bearbeitete Lauffläche aufweist.

Erfindungsgemäß bewirken thermisch bedingte Längenänderungen des ersten Rotorwellenteils 3 keine Verfälschungen bei der Erfassung der Winkellage des ersten Rotorwellenteils durch den am Elektromotor angeordneten Winkelsensor. Denn das dem Winkelsensor zugewandte Lager 2 des ersten Rotorwellenteils 3 ist als Festlager ausgeführt.

Ebenso ist aber lastseitig ein Festlager vorgesehen. Hierzu ist das Lager des zweiten Rotorwellenteils 9 als Festlager vorgesehen.

Bei weiteren erfindungsgemäßen Ausführungsbeispielen ist eine Kupplung zwischen dem ersten Rotorwellenteil 3 und der Sensorwelle vorgesehen, so dass in die Rotorwelle 3 eingeleiteter Drehmomentruck und/oder eingeleitete Quermomentstöße von der Sensorwelle ferngehalten oder nur vermindert an die Sensorwelle weitergeleitet werden.

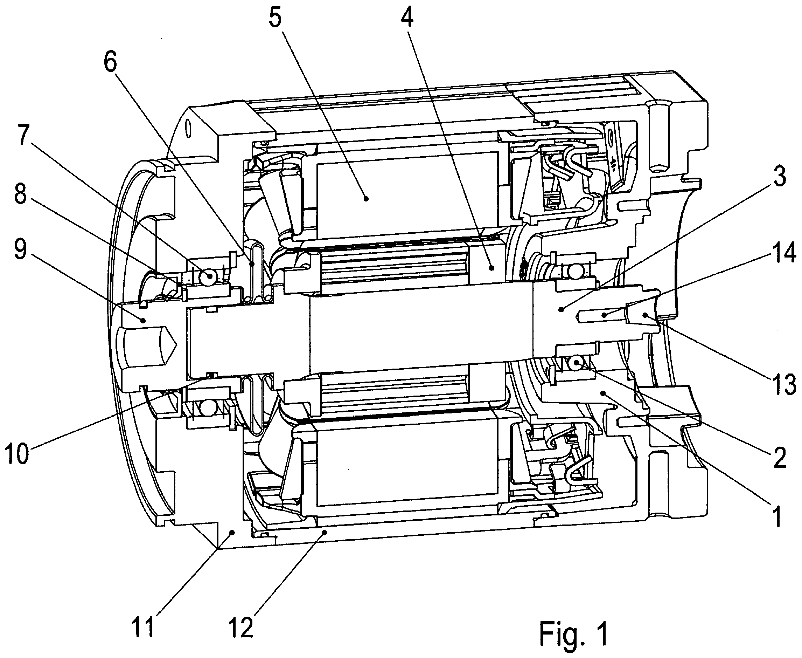

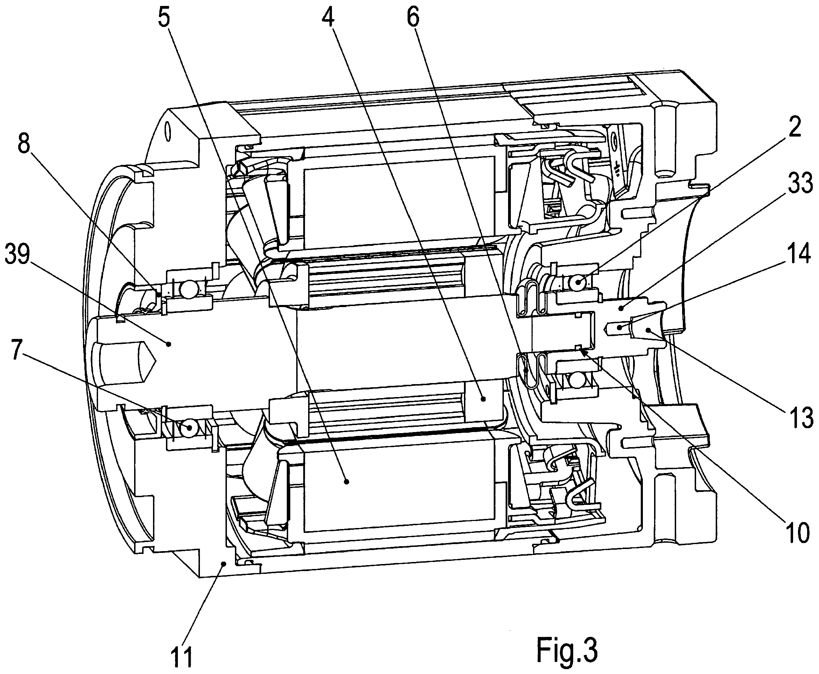

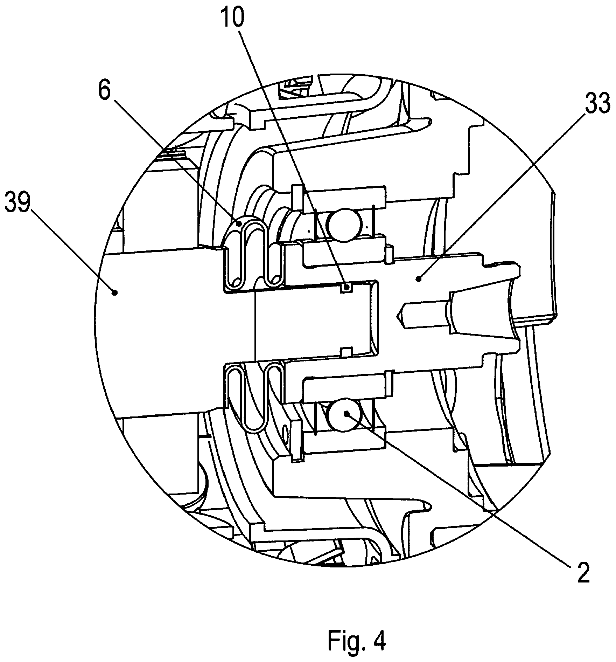

Wie in Figur 3 und 4 gezeigt, ist bei weiteren erfindungsgemäßen Ausführungsbeispielen der Balg 10 auf der anderen Seite des Aktivteils 4 angeordnet. Somit ist das zweite Rotorwellenteil 39 axial länger als in Figur 1 ausgeführt und nimmt das Aktivteil 4 auf.

Entsprechend kürzer ist das erste Rotorwellenteil 33 ausgeführt.

Wie auch bei Figur 1 ist bei Figur 3 das Lager 2 des ersten Rotorwellenteils 33 auf einem kleineren Radialabstand angeordnet als das Lager 7 des zweiten Rotorwellenteils 39. Denn B-Seitig ist kein wesentliches Drehmoment durchzuleiten.

Insbesondere wird also bei Figur 3 vom Aktivteil Drehmoment direkt in das zweite rotorwellenteil 39 eingeleitet und A-seitig, also im Beriech des Lagers 7, herausgeleitet zur anzutreibenden Last.

Der Dichtring 10 ist bei Figur 3 in dem vom Lager 2 überdeckten axialen Bereich angeordnet.

B-seitig, also am ersten Rotorwellenteil 33, ist die Sensorwelle des Winkelsensors verbunden, insbesondere schaubverbunden mit dem Rotorwellenteil 33.

Da das Drehmoment A-seitig herausgeleitet wird, ist der Balg 6 nur gering belastet.

### Bezugszeichenliste

1 erstes Flanschteil, B-seitiger Flansch
2 Lager, insbesondere Festlager
3 erstes Rotorwellenteil
4 Aktivteil, insbesondere Kurzschlusskäfig
5 Stator
6 Balg
7 Lager, insbesondere Festlager
8 Wellendichtring
9 zweites Rotorwellenteil
10 Dichtring, insbesondere O-Ring
11 zweites Flanschteil, A-seitiger Flansch
12 Statorgehäuse
13 innenkonusförmiger Bereich
14 Innengewinde
33 erstes Rotorwellenteil
39 zweites Rotorwellenteil

## Patentansprüche

1. Elektromotor mit einer Rotorwelle und einem ersten und zweiten Lager,
**wobei** die Rotorwelle ein erstes Rotorwellenteil und ein zweites Rotorwellenteil aufweist,
wobei das erste Rotorwellenteil (3) über das erste Lager (2) drehbar gelagert ist,
**wobei der in axialer Richtung vom ersten Rotorwellenteil (3) überdeckte Bereich mit dem vom zweiten Lager (7) in axialer Richtung überdeckten Bereich überlappt.**
wobei das zweite Rotorwellenteil (9) über das zweite Lager (7) drehbar gelagert ist,
wobei ein Balg (6) an seinem ersten axialen Endbereich mit dem ersten Rotorwellenteil verbunden ist, insbesondere schweißverbunden ist,
wobei der Balg an seinem zweiten axialen Endbereich mit dem zweiten Rotorwellenteil verbunden ist, insbesondere schweißverbunden ist,
wobei **der in axialer Richtung vom ersten Rotorwellenteil (3) überdeckte Bereich mit dem von dem in axialer Richtung vom zweiten Rotorwellenteil** (9) **überdeckten Bereich überlappt,**
**wobei zwischen erstem und zweitem Rotorwellenteil ein Ringteil** (10) **angeordnet ist,**
**wobei das Ringteil ein Dichtring, insbesondere ein O-Ring, ist, insbesondere aus Gummi oder einem Kunststoff, insbesondere Polymer,**
**insbesondere wobei das erste Rotorwellenteil (3) einstückig also einteilig, ausgeführt ist,**
**insbesondere wobei das zweite Rotorwellenteil** (9) **einstückig also einteilig, ausgeführt ist.**

2. Elektromotor nach Anspruch 1,
**dadurch gekennzeichnet, dass**
**die axiale Richtung parallel zur Drehachse der Rotorwelle ausgerichtet ist,**
**insbesondere wobei das erste Rotorwellenteil (3) in eine Ausnehmung des zweiten Rotorwellenteils (9) hineinragt und/oder eingesteckt ist.**

3. Elektromotor nach Anspruch 1,
**dadurch gekennzeichnet, dass**
**das erste oder zweite Rotorwellenteil eine bezogen auf die Drehachse des Rotorwellenteils in Umfangsrichtung umlaufende Ringnut aufweist, in welcher das Ringteil zumindest teilweise aufgenommen ist und/oder in welche das Ringteil zumindest teilweise hineinragt.**

4. Elektromotor nach mindestens einem der vorangegangenen Ansprüche,
**dadurch gekennzeichnet, dass**
**der vom Ringteil überdeckte axiale Bereich im vom ersten Lager oder vom zweiten Lager überdeckten axialen Bereich enthalten ist.**

5. Elektromotor nach mindestens einem der vorangegangenen Ansprüche,
**dadurch gekennzeichnet, dass**
der Balg axial zwischen dem ersten und dem zweiten Lager angeordnet ist,
insbesondere wobei der Balg axial zwischen einer Stufe des ersten Rotorwellenteils und dem zweiten Lager angeordnet ist oder wobei der Balg axial zwischen einer Stufe des zweiten Rotorwellenteils und dem ersten Lager angeordnet ist.

6. Elektromotor nach mindestens einem der vorangegangenen Ansprüche,
**dadurch gekennzeichnet, dass**
der Balg einerseits an einer Stufe des ersten Rotorwellenteils abgestützt ist und andererseits an einer Stirnfläche des zweiten Rotorwellenteils abgestützt ist
oder dass
der Balg einerseits an einer Stufe des zweiten Rotorwellenteils abgestützt ist und andererseits an einer Stirnfläche des ersten Rotorwellenteils abgestützt ist.

7. Elektromotor nach mindestens einem der vorangegangenen Ansprüche,
**dadurch gekennzeichnet, dass**
der Balg das erste Rotorwellenteil an einer Kontaktfläche berührt, welche eine einzige axiale Position aufweist, insbesondere also sich in Umfangsrichtung und in radialer Richtung erstreckt,
und/oder dass
der Balg das zweite Rotorwellenteil an einer Kontaktfläche berührt, welche eine einzige axiale Position aufweist, insbesondere also sich in Umfangsrichtung und in radialer Richtung erstreckt,
insbesondere so, dass der Balg bei der Herstellung des Motors vor dem Schweißverbinden des Balgs mit dem zweiten Rotorwellenteil radial verschiebbar angeordnet ist.

8. Elektromotor nach mindestens einem der vorangegangenen Ansprüche,
**dadurch gekennzeichnet, dass**
der Balg als **weiteres** Ringteil ausgeführt ist, wobei die Ringöffnung einen lichten Innendurchmesser aufweist, der größer ist als der Außendurchmesser des ersten Rotorwellenteils in dem vom Balg überdeckten axialen Bereich,
insbesondere so, dass der Balg bei der Herstellung des Motors vor dem Schweißverbinden des Balgs mit dem ersten Rotorwellenteil radial verschiebbar angeordnet ist.

9. Elektromotor nach mindestens einem der vorangegangenen Ansprüche,
**dadurch gekennzeichnet, dass**
das erste oder zweite Rotorwellenteil durch den Balg, insbesondere durch die Ringöffnung des Balgs, durchgeführt ist.

10. Elektromotor nach mindestens einem der vorangegangenen Ansprüche,
**dadurch gekennzeichnet, dass**
die Kontaktfläche am zweiten Rotorwellenteil eine Stirnfläche des zweiten Rotorwellenteils ist
oder dass
die Kontaktfläche am ersten Rotorwellenteil eine Stirnfläche des ersten Rotorwellenteils ist.

11. Elektromotor nach mindestens einem der vorangegangenen Ansprüche,
**dadurch gekennzeichnet, dass**
die Kontaktfläche am ersten Rotorwellenteil an einer Stufe des ersten Rotorwellenteils angeordnet ist.

12. Elektromotor nach mindestens einem der vorangegangenen Ansprüche,
**dadurch gekennzeichnet, dass**
ein Aktivteil vom ersten Rotorwellenteil aufgenommen ist,
wobei der Balg
- entweder axial zwischen dem auf dem ersten Rotorwellenteil angeordneten Aktivteil und dem zweiten Lager und/oder dem zweiten Rotorwellenteil angeordnet ist,
- **oder axial zwischen dem auf dem zweiten Rotorwellenteil angeordneten Aktivteil und dem ersten Lager und/oder dem ersten Rotorwellenteil angeordnet ist,**
insbesondere wobei das Aktivteil ein Kurzschlusskäfig oder eine Permanentmagnetanordnung ist,
insbesondere wobei der Kurzschlusskäfig wärmeleitend verbunden ist mit dem ersten Rotorwellenteil,
insbesondere wobei der Wärmeübergangswiderstand zwischen dem Kurzschlusskäfig und dem ersten Rotorwellenteil betragsmäßig kleiner ist als der Wärmeübergangswiderstand zwischen dem ersten Rotorwellenteil und zur Umgebung und/oder zum Gehäuse des Motors.

13. Elektromotor nach mindestens einem der vorangegangenen Ansprüche,
**dadurch gekennzeichnet, dass**
das Gehäuse des Elektromotors ein Gehäuseteil, **insbesondere Statorgehäuse (12),** aufweist, das mit einem ersten und einem zweiten Flanschteil verbunden ist, wobei das Gehäuseteil zwischen dem ersten und zweiten Flanschteil angeordnet ist **und sowohl das erste als auch das zweite Flanschteil berührt,**
wobei das erste Lager im ersten **Flanschteil** aufgenommen ist,
wobei das zweite Lager im zweiten **Flanschteil** aufgenommen ist,
**insbesondere wobei das erste Lager ein Wälzlager, insbesondere Kugellager, ist und wobei das zweite Lager ein Wälzlager, insbesondere Kugellager, ist.**

14. Elektromotor nach mindestens einem der vorangegangenen Ansprüche,
**dadurch gekennzeichnet, dass**
der Balg aus einem Metallblech gefertigt ist.

15. Elektromotor nach mindestens einem der vorangegangenen Ansprüche,
**dadurch gekennzeichnet, dass**
der Elektromotor ein Getriebe aufweist, wobei das zweite Rotorwellenteil mit einer Schrägverzahnung versehen ist oder drehfest verbunden ist mit einem schrägverzahnten Verzahnungsteil,
wobei die Schrägverzahnung oder das schrägverzahnten Teil mit einem Verzahnungsteil des Getriebes im Eingriff ist,
und/oder dass
ein Wellendichtring auf der vom ersten Rotorwellenteil abgewandten Seite des zweiten Lagers angeordnet ist,
insbesondere wobei der Wellendichtring im ersten Flanschteil aufgenommen ist, und/oder wobei eine Dichtlippe auf dem zweiten Rotorwellenteil läuft.

## Claims

1. An electric motor having a rotor shaft and a first and second bearing,
wherein the rotor shaft has a first rotor shaft part and a second rotor shaft part,
wherein the first rotor shaft part (3) is rotatably mounted via the first bearing (2),
wherein the region covered in an axial direction by the first rotor shaft part (3) overlaps with the region covered in an axial direction by the second bearing (7),
wherein the second rotor shaft part (9) is rotatably mounted via the second bearing (7),
wherein a bellows (6) is connected at its first axial end-region to the first rotor shaft part, in particular connected by welding,
wherein the bellows is connected at its second axial end-region to the second rotor shaft part, in particular connected by welding,
wherein the region covered in an axial direction by the first rotor shaft part (3) overlaps with the region covered in an axial direction by the second rotor shaft part (9),
wherein between first and second rotor shaft part there is arranged a ring part (10),
wherein the ring part is a sealing ring, in particular an O-ring, in particular made of rubber or a plastics material, in particular polymer,
in particular wherein the first rotor shaft part (3) is formed in one-piece, therefore as one-part, in particular wherein the second rotor shaft part (9) is formed in one piece, therefore as one-part.

2. An electric motor according to claim 1,
**characterised in that**
the axial direction is oriented parallel to the axis of rotation of the rotor shaft,
in particular wherein the first rotor shaft part (3) projects into a recess of the second rotor shaft part (9) and/or is inserted therein.

3. An electric motor according to claim 1,
**characterised in that**
the first or second rotor shaft part has a ring groove encircling in a circumferential direction related to the axis of rotation of the rotor shaft part, in which ring groove there is at least partially received the ring part and/or into which ring groove there at least partially projects the ring part.

4. An electric motor according to at least one of the preceding claims,
**characterised in that**
the axial region covered by the ring part is contained in the axial region covered by the first bearing or by the second bearing.

5. An electric motor according to at least one of the preceding claims,
**characterised in that**
the bellows is arranged axially between the first and the second bearing,
in particular wherein the bellows is arranged axially between a step of the first rotor shaft part and the second bearing or wherein the bellows is arranged axially between a step of the second rotor shaft part and the first bearing.

6. An electric motor according to at least one of the preceding claims,
**characterised in that**
the bellows is supported at the one side on a step of the first rotor shaft part and at the other side on an end face of the second rotor shaft part,
or **in that**
the bellows is supported at the one side on a step of the second rotor shaft part and at the other side on an end face of the first rotor shaft part.

7. An electric motor according to at least one of the preceding claims,
**characterised in that**
the bellows contacts the first rotor shaft part at a contact surface which has a single axial position, in particular therefore extends in a circumferential direction and in a radial direction,
and/or **in that**
the bellows contacts the second rotor shaft part at a contact surface which has a single axial position, in particular therefore extends in a circumferential direction and in a radial direction, in particular in such a manner that upon manufacture of the motor, the bellows is arranged in a radially displaceable manner before the connection by welding of the bellows to the second rotor shaft part.

8. An electric motor according to at least one of the preceding claims,
charaterised in that
the bellows is in the form of a further ring part, wherein the ring opening has a clear inner diameter which is greater than the outer diameter of the first rotor shaft part in the axial region covered by the bellows,
in particular in such a manner that upon manufacture of the motor, the bellows is arranged in a radially displaceable manner before the connection by welding of the bellows to the first rotor shaft part.

9. An electric motor according to at least one of the preceding claims,
**characterised in that**
the first or second rotor shaft part is passed through the bellows, in particular through the ring opening of the bellows.

10. An electric motor according to at least one of the preceding claims,
**characterised in that**
the contact surface at the second rotor shaft part is an end face of the second rotor shaft part or **in that**
the contact surface at the first rotor shaft part is an end face of the first rotor shaft part.

11. An electric motor according to at least one of the preceding claims,
**characterised in that**
the contact surface at the first rotor shaft part is arranged at a step of the first rotor shaft part.

12. An electric motor according to at least one of the preceding claims,
**characterised in that**
an active part is received by the first rotor shaft part,
wherein the bellows
- either is arranged axially between the active part, arranged on the first rotor shaft part, and the second bearing and/or the second rotor shaft part,
- or is arranged axially between the active part, arranged on the second rotor shaft part, and the first bearing and/or the first rotor shaft part,
in particular wherein the active part is a short-circuit cage or a permanent magnet arrangement,
in particular wherein the short-circuit cage is connected in a heat-conducting manner to the first rotor shaft part,
in particular wherein the heat transmission resistance between the short-circuit cage and the first rotor shaft part is lower in amount than the heat transmission resistance between the first rotor shaft part and to the surroundings and/or to the housing of the motor.

13. An electric motor according to at least one of the preceding claims,
**characterised in that**
the housing of the electric motor has a housing part, in particular stator housing (12), which is connected to a first and a second flange part, wherein the housing part is arranged between the first and second flange part and contacts both the first and the second flange part,
wherein the first bearing is received in the first flange part,
wherein the second bearing is received in the second flange part,
in particular wherein the first bearing is a rolling bearing, in particular ball bearing, and wherein the second bearing is a rolling bearing, in particular ball bearing.

14. An electric motor according to at least one of the preceding claims,
**characterised in that**
the bellows is manufactured from a metal sheet.

15. An electric motor according to at least one of the preceding claims,
**characterised in that**
the electric motor has a gear unit, wherein the second rotor shaft part is provided with helical gearing or is connected in a rotationally-fixed manner to a helical-toothed toothing part,
wherein the helical gearing or the helical-toothed part engages a toothing part of the gear unit, and/or **in that**
a shaft sealing ring is arranged at that side of the second bearing remote from the first rotor shaft part,
in particular wherein the shaft sealing ring is received in the first flange part, and/or wherein a sealing lip runs on the second rotor shaft part.

## Revendications

1. Moteur électrique comportant un arbre de rotor et un premier et un deuxième palier,
dans lequel l'arbre de rotor présente une première partie d'arbre de rotor et une deuxième partie d'arbre de rotor,
dans lequel la première partie d'arbre de rotor (3) est reçue de manière rotative par le premier palier (2),
dans lequel la zone couverte par la première partie d'arbre de rotor (3) dans la direction axiale chevauche la zone couverte par le deuxième palier (7) dans la direction axiale,
dans lequel la deuxième partie d'arbre de rotor (9) est reçue de manière rotative par le deuxième palier (7),
dans lequel un soufflet (6) est relié, en particulier par soudage, à la première partie d'arbre de rotor par sa première zone d'extrémité axiale,
dans lequel le soufflet est relié, en particulier par soudage, à la deuxième partie d'arbre de rotor par sa deuxième zone d'extrémité axiale,
dans lequel la zone couverte par la première partie d'arbre de rotor (3) dans la direction axiale chevauche la zone couverte par la deuxième partie d'arbre de rotor (9) dans la direction axiale,
dans lequel une partie annulaire (10) est disposée entre la première et la deuxième partie d'arbre de rotor,
dans lequel la partie annulaire est une bague d'étanchéité, en particulier un joint torique, en particulier en caoutchouc ou en matière plastique, en particulier en polymère,
en particulier dans lequel la première partie d'arbre de rotor (3) est réalisée d'un seul tenant, c'est-à-dire en une seule pièce,
en particulier dans lequel la deuxième partie d'arbre de rotor (9) est réalisée d'un seul tenant, c'est-à-dire en une seule pièce.

2. Moteur électrique selon la revendication 1,
**caractérisé en ce que**
la direction axiale est orientée parallèlement à l'axe de rotation de l'arbre de rotor,
en particulier dans lequel la première partie d'arbre de rotor (3) pénètre et/ou est insérée dans un évidement de la deuxième partie d'arbre de rotor (9).

3. Moteur électrique selon la revendication 1,
**caractérisé en ce que**
la première ou la deuxième partie d'arbre de rotor présente une rainure annulaire s'étendant dans la direction circonférentielle par rapport à l'axe de rotation de la partie d'arbre de rotor, dans laquelle la partie annulaire est reçue au moins partiellement et/ou dans laquelle la partie annulaire pénètre au moins partiellement.

4. Moteur électrique selon au moins l'une des revendications précédentes,
**caractérisé en ce que**
la zone axiale couverte par la partie annulaire est contenue dans la zone axiale couverte par le premier palier ou par le deuxième palier.

5. Moteur électrique selon au moins l'une des revendications précédentes,
**caractérisé en ce que**
le soufflet est disposé axialement entre le premier et le deuxième palier,
en particulier dans lequel le soufflet est disposé axialement entre un étage de la première partie d'arbre de rotor et le deuxième palier ou dans lequel le soufflet est disposé axialement entre un étage de la deuxième partie d'arbre de rotor et le premier palier.

6. Moteur électrique selon au moins l'une des revendications précédentes,
**caractérisé en ce que**
le soufflet s'appuie d'une part sur un étage de la première partie d'arbre de rotor et d'autre part sur une surface frontale de la deuxième partie d'arbre de rotor
ou **en ce que**
le soufflet s'appuie d'une part sur un étage de la deuxième partie d'arbre de rotor et d'autre part sur une surface frontale de la première partie d'arbre de rotor.

7. Moteur électrique selon au moins l'une des revendications précédentes,
**caractérisé en ce que**
le soufflet est en contact avec la première partie d'arbre de rotor par une surface de contact qui présente une seule position axiale, c'est-à-dire qui s'étend en particulier dans la direction circonférentielle et dans la direction radiale,
et/ou **en ce que**
le soufflet est en contact avec la deuxième partie d'arbre de rotor par une surface de contact qui présente une seule position axiale, c'est-à-dire qui s'étend en particulier dans la direction circonférentielle et dans la direction radiale,
en particulier de telle sorte que, lors de la fabrication du moteur, le soufflet soit disposé de manière à pouvoir coulisser radialement avant le soudage du soufflet avec la deuxième, partie d'arbre de rotor.

8. Moteur électrique selon au moins l'une des revendications précédentes,
**caractérisé en ce que**
le soufflet est réalisé sous la forme d'une autre partie annulaire, l'ouverture annulaire présentant un diamètre intérieur libre qui est supérieur au diamètre extérieur de la première partie d'arbre de rotor dans la zone axiale couverte par le soufflet,
en particulier de telle sorte que, lors de la fabrication du moteur, le soufflet soit disposé de manière à pouvoir coulisser radialement avant le soudage du soufflet avec la première partie d'arbre de rotor.

9. Moteur électrique selon au moins l'une des revendications précédentes,
**caractérisé en ce que**
la première ou la deuxième partie d'arbre de rotor est passée à travers le soufflet, en particulier à travers l'ouverture annulaire du soufflet.

10. Moteur électrique selon au moins l'une des revendications précédentes,
**caractérisé en ce que**
la surface de contact sur la deuxième partie d'arbre de rotor est une surface frontale de la deuxième partie d'arbre de rotor
ou **en ce que**
la surface de contact sur la première partie d'arbre de rotor est une surface frontale de la première partie d'arbre de rotor.

11. Moteur électrique selon au moins l'une des revendications précédentes,
**caractérisé en ce que**
la surface de contact sur la première partie d'arbre de rotor est disposée sur un étage de la première partie d'arbre de rotor.

12. Moteur électrique selon au moins l'une des revendications précédentes,
**caractérisé en ce**
**qu'**une partie active est reçue par la première partie d'arbre de rotor,
dans lequel le soufflet est
- soit disposé axialement entre la partie active disposée sur la première partie d'arbre de rotor et le deuxième palier et/ou la deuxième partie d'arbre de rotor,
- soit disposé axialement entre la partie active disposée sur la deuxième partie d'arbre de rotor et le premier palier et/ou la première partie d'arbre de rotor,
en particulier dans lequel la partie active est une cage de court-circuit ou un agencement d'aimants permanents,
en particulier dans lequel la cage de court-circuit est reliée à la première partie d'arbre de rotor de manière thermiquement conductrice,
en particulier dans lequel la résistance de transfert thermique entre la cage de court-circuit et la première partie d'arbre de rotor est inférieure en valeur absolue à la résistance de transfert thermique entre la première partie d'arbre de rotor et l'environnement et/ou le boîtier du moteur.

13. Moteur électrique selon au moins l'une des revendications précédentes,
**caractérisé en ce que**
le boîtier du moteur électrique présente une partie de boîtier, en particulier un boîtier de stator (12), qui est reliée à une première et une deuxième partie formant bride, la partie de boîtier étant disposée entre la première et la deuxième partie formant bride et étant en contact à la fois avec la première et la deuxième partie formant bride,
dans lequel le premier palier est reçu dans la première partie formant bride,
dans lequel le deuxième palier est reçu dans la deuxième partie formant bride,
en particulier dans lequel le premier palier est un palier à roulement, en particulier un roulement à billes, et dans lequel le deuxième palier est un palier à roulement, en particulier un roulement à billes.

14. Moteur électrique selon au moins l'une des revendications précédentes,
**caractérisé en ce que**
le soufflet est fabriqué à partir d'une tôle métallique.

15. Moteur électrique selon au moins l'une des revendications précédentes,
**caractérisé en ce que**
le moteur électrique présente un réducteur, la deuxième partie d'arbre de rotor étant pourvue d'une denture hélicoïdale ou étant solidaire en rotation d'une partie dentée à denture hélicoïdale,
dans lequel la denture hélicoïdale ou la partie à denture hélicoïdale est en prise avec une partie dentée du réducteur,
et/ou **en ce**
**qu'**une bague d'étanchéité d'arbre est disposée sur le côté du deuxième palier opposé à la première partie d'arbre de rotor,
en particulier dans lequel la bague d'étanchéité d'arbre est reçue dans la première partie formant bride, et/ou dans lequel une lèvre d'étanchéité tourne sur la deuxième partie d'arbre de rotor.
